# FASCICULE DE BREVET EUROPEEN

(11) **EP 1 176 037 B1**
(45) Date de publication et mention de la délivrance du brevet: **16.11.2005**
(21) Numéro de dépôt: 01117572.6
(22) Date de dépôt: 20.07.2001
(51) Int. Cl.: B60H 1/00

(54) **Dispositif de distribution d'un flux d'air équipé d'un volet articulé**
Mit einer schwenkbaren Klappe ausgerüstete Luftsteueranordnung
Air flow distribution device provided with a hinged flap

(30) Priorité: 28.07.2000 FR 0009924
(43) Date de publication de la demande: 30.01.2002
(73) Titulaire: VALEO SYSTEMES THERMIQUES, 78321 Le Mesnil St Denis Cedex (FR)
(72) Inventeur: Pierres, Philippe, 78310 Maurepas (FR); Dubois, Christian, 78610 Le Perray en Yvelines (FR); Auvity, Michel, 78140 Velizy (FR)

(56) Documents cités:
- EP-A- 0 732 231
- DE-A- 19 753 617
- FR-A- 2 741 689
- US-A- 4 683 913

## Description

Le domaine de l'invention est celui des dispositifs de distribution d'air dans une installation de ventilation, chauffage et/ou climatisation pour véhicule automobile.

Elle concerne plus particulièrement un dispositif du type comprenant :
- un boîtier muni d'une première et d'une seconde fenêtre propre à communiquer respectivement avec un premier et un second conduit de l'installation, et au moins une ouverture propre à communiquer avec un troisième conduit de l'installation,
- un volet monté dans le boîtier, à rotation autour d'un axe longitudinal distant desdites fenêtres et agencé pour obturer sélectivement la première ou la seconde fenêtre en vue de faire circuler un flux d'air entre le troisième conduit et le premier ou le second conduit, et
- des moyens de commande en rotation du volet selon son axe à l'intérieur du boîtier.

Or, dans l'art antérieur connu, les moyens de commande en rotation du volet (en général un petit moteur électrique) sont montés en bout d'axe, à l'opposé du pulseur propulsant l'air vers l'habitacle.

Il s'avère que dans ce type de dispositifs, des phénomènes de torsion de l'axe peuvent survenir en partie du fait du poids du volet ou de la répartition de sa masse (problème d'inertie), engendrant par exemple des fuites d'air, une usure prématurée du volet, voire un blocage en rotation de celui-ci.

Un dispositif de distribution d'un flux d'air de ce type est décrit dans la Demande de Brevet Allemand DE 197 53 617 au nom de la demanderesse.

Ainsi, la solution proposée par l'invention, dans le cadre d'un dispositif tel que décrit précédemment, est que les moyens de commande en rotation du volet selon son axe d'articulation soient disposés sensiblement transversalement audit axe. Cette solution permet également d'avoir un contrôle plus précis de la rotation du volet selon son axe. Par ailleurs, la solution présentée permet de réduire la dimension des câbles de commande, ce qui engendre un parcours plus direct de ceux-ci vers le tableau de bord.

Selon un aspect complémentaire, les moyens de commande seront avantageusement disposés perpendiculairement à l'axe de rotation et traverseront le boîtier du volet. Ces moyens seront de préférence disposés au niveau de la partie médiane de l'axe du volet.

Selon un mode de réalisation préférentiel permettant de limiter le nombre de pièces en mouvement tout en garantissant une rotation précise du volet, il est prévu que les moyens de commande du volet comprennent un moteur relié à un levier lui-même relié à un bras solidaire d'une partie du volet, au niveau de son axe. En particulier le levier sera monté directement sur l'axe du moteur.

Afin de ne pas augmenter l'encombrement du boîtier tout en permettant un débattement suffisant aux éléments de la cinématique des moyens de commande, il est prévu que le boîtier présente intérieurement un décrochement radial permettant de loger une partie des moyens de commande en rotation du volet.

Il pourra également être prévu que le levier présente, à une extrémité libre opposée à l'axe, un ergot saillant coopérant avec un logement aménagé au travers du bras de telle sorte que le mouvement de rotation du moteur soit transmis au volet via l'ergot du levier et la fente du bras.

L'invention sera mieux comprise, et d'autres caractéristiques, détails et avantages de celle-ci apparaîtront plus clairement à la lecture de la description qui suit, faite à titre d'exemple en référence aux dessins annexés dans lesquels :
- la figure 1 est une vue en coupe d'un dispositif conforme à l'invention, et
- la figure 2 est une autre vue en coupe d'un dispositif conforme à l'invention.

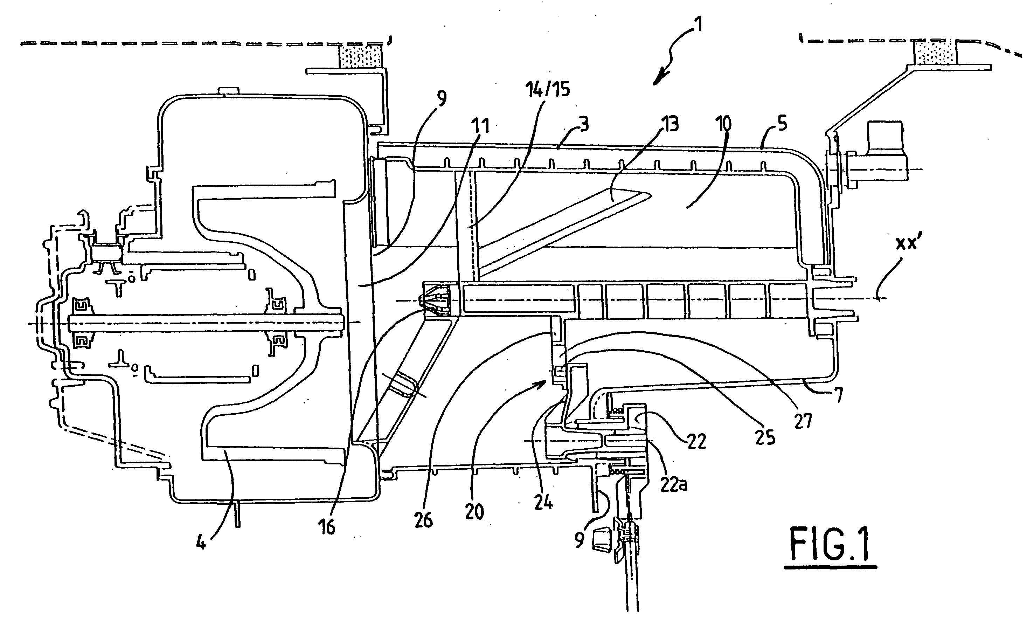

On se réfère tout d'abord à la figure 1 pour décrire un dispositif 1 de distribution d'un flux d'air d'une installation de ventilation, chauffage et/ou climatisation d'un habitacle (non représenté) de véhicule automobile.

Le dispositif 1 comporte un boîtier 3 de forme générale creuse sensiblement cylindrique, ce boîtier étant muni d'ouvertures (ou fenêtres) 5 et 7 qui communiquent respectivement avec une conduite d'entrée d'air extérieur et d'air recirculé (issu initialement de l'habitacle). Le boîtier 3 comporte, sensiblement à la base du cylindre, une cloison 9 munie d'une ouverture 11 et formant une virole déflectrice communiquant avec un conduit d'aération de l'habitacle du véhicule (non représenté.)

Le boîtier 3 loge un volet 10 pouvant tourner autour d'un axe longitudinal xx' s'étendant le long du cylindre et sensiblement parallèle à l'axe du cylindre que forme le boîtier 3. Le volet 10 est un volet de type tambour comportant une portion de cylindre ou de sphère creux 12 qui peut pivoter autour de l'axe xx' pour être alternativement en regard des ouvertures 5 et 7 du boîtier 3 en vue de leur fermeture ou de leur ouverture. Le volet tambour 10 comporte également trois bras de renfort 13, 14 et 15 qui se rejoignent en une partie centrale munie d'un pion 16 pour former un trépied, le pion étant destiné à être logé par exemple dans un évidement de la virole déflecrice (non représenté). Cette conception du volet permet une bonne circulation de l'air dans le dispositif.

Ainsi, la position angulaire du volet 10 permet de gérer la portion de flux d'air extérieur ou de flux d'air recirculé qu'admet le boîtier pour l'alimentation de l'habitacle. En pratique, l'air admis dans le boîtier 3 est acheminé dans un bloc de ventilation muni d'un pulseur 4, pour être ensuite évacué vers le conduit d'aération de l'habitacle précité.

Ce volet 10 est mis en rotation selon son axe xx' par des moyens 20 de commande en rotation, qui sont, contrairement à l'art antérieur, déportés de l'extrémité dudit axe puisqu'ils sont disposés transversalement (ou latéralement) à celui-ci. De préférence ces moyens 20 de commande sont disposés sensiblement au niveau d'une partie médiane C de l'axe xx' (et donc du volet) et de préférence perpendiculairement à celui-ci. Cette disposition permet par ailleurs de mieux compenser le déséquilibre de poids que présente le volet tambour (charge répartie d'un seul côté de l'axe), et de réduire encore les phénomènes de torsion autour de son axe.

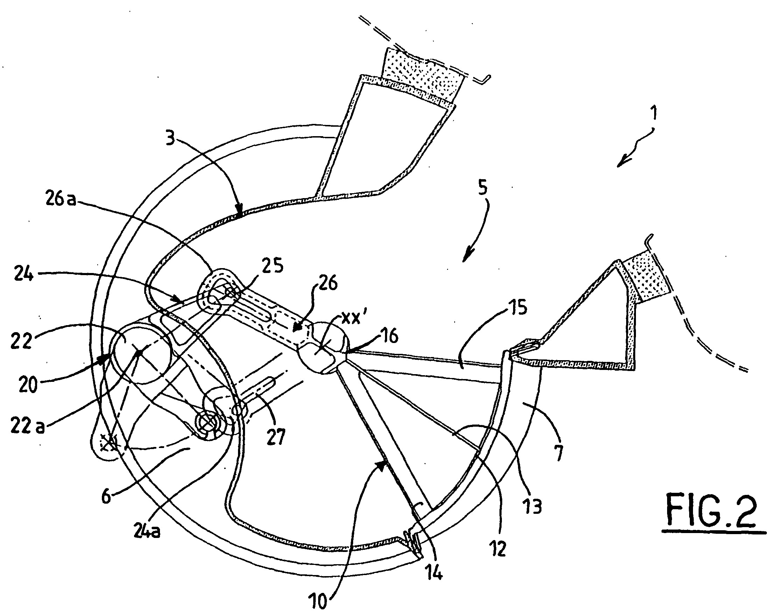

Dans la solution représentée sur la figure 2, on peut voir que ces moyens 20 prennent la forme d'un petit moteur (de préférence électrique) rotatif 22 dont l'axe 22a est accouplé directement à un levier 24 rigide présentant, à une extrémité libre 24a opposée audit axe 22a, un ergot 25 saillant venant s'introduire à l'intérieur d'un logement creux 27 d'un bras de manoeuvre 26 solidaire quant à lui du volet 10, sensiblement au niveau de son axe de rotation xx'. Ce logement creux 27 présente une forme de « T » ou de champignon avec une partie oblongue prolongée, vers l'extrémité libre 24a du levier, par une « tête » élargie.

Le moteur 22 ainsi que son levier 24 sont placé à l'intérieur d'un logement radial 6 aménagé à l'intérieur du boîtier 3. Ce logement 6 présente une face plane 9 perpendiculaire à l'axe xx' pour fixer ce moteur 22. Le débattement du levier 24 est donc possible sans augmentation des dimensions externes du boîtier, comme on peut le voir sur la figure 2.

Ainsi, pour faire tourner le volet autour de son axe, il suffit de piloter le moteur et de faire tourner le levier 24 qui, par coopération de son ergot 25 et du logement 27 du bras 26, fait à son tour tourner le volet 10, l'ergot passant d'un côté de la tête du logement puis par la partie oblongue pour arriver, en fin de course du volet, dans la partie opposée de la tête. Cette solution est très simple à mettre en oeuvre, nécessite très peu de pièces et permet un ajustage précis de l'ouverture et de la fermeture du volet par ce jeu de bras et de levier.

Bien entendu, la présente invention n'est nullement limitée au mode de réalisation décrit ci-avant uniquement à titre d'exemple.

En particulier, le boîtier, ainsi que le volet logé dans le boîtier, présentent ici des formes générales cylindriques droites et creuses. Dans une variante, ces formes pourraient être coniques ou encore sphériques creuses, le volet conservant une forme sensiblement homologue de celle du boîtier.

Il est également possible de prévoir une solution dans laquelle le levier n'est pas directement lié à l'axe du moteur mais via une pièce intermédiaire ou bien encore des engrenages, notamment pour démultiplier la force transmise par l'axe du moteur au levier.

La présente invention trouve une application intéressante à la répartition de flux d'air extérieur et de flux d'air recirculé dans un boîtier de distribution communiquant avec un conduit d'alimentation d'un habitacle de véhicule automobile. Elle trouve cependant d'autres applications, notamment à une chambre de mixage d'une installation de ventilation, chauffage et/ou climatisation de l'habitacle d'un tel véhicule, par exemple un dispositif comprenant un boîtier logeant à rotation un volet de mixage en amont de la chambre de mixage. Elle trouve une autre application intéressante pour la répartition de la distribution d'air dans l'habitacle, par exemple entre une aération basse, une aération centrale et une aération du pare-brise.

## Revendications

1. Dispositif (1) de distribution d'un flux d'air, notamment d'une installation de ventilation, chauffage et/ou climatisation d'un véhicule automobile, du type comprenant :
- un boîtier (3) muni d'une première (5) et d'une seconde (7) fenêtre propres à communiquer respectivement avec un premier et un second conduit de l'installation, et au moins une ouverture propre à communiquer avec un troisième conduit de l'installation,
- un volet (10) de forme générale choisie parmi les formes cylindrique ou sphérique ou conique, monté dans le boîtier (3), à rotation autour d'un axe longitudinal xx', ledit axe s'étendant entre deux extrémités, distant desdites fenêtres (5, 7) et agencé pour obturer sélectivement la première ou la seconde fenêtre en vue de faire circuler un flux d'air entre le troisième conduit et le premier ou le second conduit, et
- des moyens (20) de commande en rotation du volet (10) selon son axe xx' à l'intérieur du boîtier (3), lesdits moyens (20) de commande en rotation étant disposés transversalement à l'axe de rotation xx' du volet
**caractérisé en ce que** les moyens de commande (20) en rotation du volet sont déportés entre les deux extrémités de l'axe de rotation xx'.

2. Dispositif (1) selon la revendication 1, **caractérisé en ce que** les moyens (20) de commande sont disposés perpendiculairement à l'axe de rotation xx' et traversent le boîtier (3) du volet (10).

3. Dispositif (1) selon l'une quelconque des revendications précédentes, **caractérisé en ce que** les moyens (20) de commande sont disposés au niveau d'une partie médiane (C) de l'axe.

4. Dispositif (1) selon l'une quelconque des revendications précédentes, **caractérisé en ce que** les moyens (20) de commande comprennent un moteur (22) relié à un levier (24) lui-même relié à un bras (26) solidaire d'une partie du volet (10), sensiblement au niveau de son axe de rotation xx'.

5. Dispositif (1) selon la revendication 4, **caractérisé en ce que** le levier (24) est monté directement sur l'axe (22a) du moteur (22).

6. Dispositif (1) selon la revendication 4 ou 5, **caractérisé en ce que** le levier (24) présente, à une extrémité libre (24a) opposée à l'axe (22a) du moteur (22), un ergot saillant (25) coopérant avec un logement creux (27) aménagé au travers du bras (26) de telle sorte que le mouvement de rotation du moteur (22) soit transmis au volet (10) via l'ergot (25) du levier (24) et le logement (27) du bras (26).

7. Dispositif (1) selon l'une quelconque des revendications précédentes, **caractérisé en ce que** le boîtier (3) présente intérieurement un décrochement radial (6) permettant de loger une partie des moyens (20) de commande en rotation du volet (10).

8. Dispositif (1) selon l'une quelconque des revendications précédentes, **caractérisé en ce que** ledit volet (10) est un volet tambour d'axe de rotation xx' sensiblement parallèle à l'axe du boîtier, réalisé sous la forme générale d'une portion de cylindre ou de sphère creux.

## Patentansprüche

1. Vorrichtung (1) zur Verteilung eines Luftflusses, der insbesondere aus einer Belüftungs-, Heizungs-, und/oder Klimaanlage eines Kraftfahrzeugs kommt und Folgendes umfasst:
- ein Gehäuse (3) versehen mit einem ersten (5) und einem zweiten (7) Fenster, das jeweils zur Kommunikation mit einer ersten und einer zweiten Leitung der Anlage geeignet ist und mindestens eine Öffnung, die zur Kommunikation mit einer dritten Leitung der Anlage geeignet ist,
- eine Klappe (10) mit einer allgemeinen Form, die aus den zylindrischen, kugelförmigen oder konischen Formen ausgewählt wurde und in das Gehäuse (3) eingebaut ist, drehbar um eine Längsachse xx', wobei sich die besagte Achse zwischen zwei Enden erstreckt
und von den besagten Fenstern (5, 7) entfernt ist und so angeordnet ist, um selektiv das erste oder das zweite Fenster zu verschließen, um einen Luftfluss zwischen der dritten Leitung und der ersten oder zweiten Leitung in Umlauf zu setzen, und
- Steuerungsmittel (20) zur Drehung der Klappe (10) um ihre Achse xx' innerhalb des Gehäuses (3), wobei die besagten Steuerungsmittel (20) zur Drehung quer zu der Drehachse xx' der Klappe angeordnet sind,
**dadurch gekennzeichnet, dass** die Steuerungsmittel (20) zur Drehung der Klappe zwischen den beiden Enden der Drehachse xx' versetzt sind.

2. Vorrichtung (1) nach Anspruch 1, **dadurch gekennzeichnet, dass** die Steuerungsmittel (20) senkrecht zu der Drehachse xx' angeordnet sind und das Gehäuse (3) der Klappe (10) durchqueren.

3. Vorrichtung (1) nach einem der vorangehenden Ansprüche, **dadurch gekennzeichnet, dass** die Steuerungsmittel (20) im Bereich eines Mittelabschnitts (C) der Achse angeordnet sind.

4. Vorrichtung (1) nach einem der vorangehenden Ansprüche, **dadurch gekennzeichnet, dass** die Steuerungsmittel (20) einen Motor (22) umfassen, der an einen Hebel (24) angeschlossen ist, der wiederum an einen Arm(26), der mit einem Teil der Klappe verbunden ist, angeschlossen ist und zwar deutlich im Bereich seiner Drehachse xx.

5. Vorrichtung (1) nach Anspruch 4, **dadurch gekennzeichnet, dass** der Hebel (24) unmittelbar auf der Achse (22a) des Motors (22) angebracht ist.

6. Vorrichtung (1) nach Anspruch 4 oder 5, **dadurch gekennzeichnet, dass** der Hebel (24) an einem freien Ende (24a) gegenüber der Achse (22a) des Motors (22) einen Vorsprung (25) aufweist, der mit einer hohlen, quer auf dem Arm (26) angebrachten Aufnahme (27) derart zusammenwirkt, dass die Drehbewegung des Motors (22) über den Vorsprung (25) des Hebels (24) und die Aufnahme (27) des Armes (26) auf die Klappe (10) übertragen wird.

7. Vorrichtung (1) nach einem der vorangehenden Ansprüche, **dadurch gekennzeichnet, dass** das Gehäuse (3) innen einen radialen Absatz (6) zur Lagerung eines Teils der Steuerungsmittel (20) zur Drehung der Klappe (10) aufweist.

8. Vorrichtung (1) nach einem der vorangehenden Ansprüche, **dadurch gekennzeichnet, dass** die besagte Klappe (10) eine Zylinderklappe ist, mit einer Drehachse xx', die deutlich parallel zur Achse des Gehäuses liegt und als allgemeine Form eines Teils eines Zylinders oder einer hohlen Kugel ausgeführt ist.

## Claims

1. Air flow distribution device (1), notably for a ventilation, heating and/or air conditioning system in an automobile vehicle, of the type comprising:
- a box (3) fitted with a first opening (5) and a second opening (7) designed to respectively communicate with a first and a second pipe in the system, and at least one opening designed to communicate with a third pipe in the system;
- an air flow control (10) of general shape chosen from among cylindrical, spherical or conical shapes, assembled in the box (3), in rotation about a longitudinal axis xx', said axis extending between two ends, set apart from said openings (5, 7) and laid out so as to selectively block the first or the second opening so that air can flow between the third pipe and the first or second pipe; and
- rotation control means (20) of the air flow control (10) about its axis xx' inside the box (3), said rotation control means (20) being positioned transversal to the axis of rotation xx' of the air flow control
**characterised in that** the rotation control means (20) of the air flow control are offset between the two ends of the axis of rotation xx'.

2. Device (1) according to claim 1, **characterised in that** the control means (20) are positioned perpendicular to the axis of rotation xx' and pass through the box (3) of the air flow control (10).

3. Device (1) according to any one of the previous claims, **characterised in that** the control means (20) are positioned at a median part (C) of the axis.

4. Device (1) according to any one of the previous claims, **characterised in that** the control means (20) comprise a motor (22) connected to a lever (24) itself connected to an arm (26) fixed to a part of the air flow control (10), approximately at its axis of rotation xx'.

5. Device (1) according to claim 4, **characterised in that** the lever (24) is assembled directly on the spindle (22a) of the motor (22).

6. Device (1) according to either claim 4 or 5, **characterised in that** the lever (24) has a projecting lug (25) at one free end (24a) opposite to the spindle (22a) of the motor (22), cooperating with a hollow housing (27) made through the arm (26) such that the rotation movement of the motor (22) is transmitted to the air flow control (10) through the lug (25) of the lever (24) and the housing (27) of the arm (26).

7. Device (1) according to any one of the previous claims, **characterised in that** the box (3) has a radial indentation (6) on the inside to house a part of the rotation control means (20) of the air flow control (10).

8. Device (1) according to any one of the previous claims, **characterised in that** the said air flow control (10) is a drum air flow control whose axis of rotation xx' is approximately parallel to the axis of the box and made in the general shape of a section of cylinder or hollow sphere.
